# FASCICULE DE BREVET EUROPEEN

(11) **EP 0 980 562 B1**
(45) Date de publication et mention de la délivrance du brevet: **05.09.2001**
(21) Numéro de dépôt: 98916780.4
(22) Date de dépôt: 08.05.1998
(51) Int. Cl.: G06K 7/08, G06K 7/10

(54) **CARTE A PUCE SANS CONTACT ASSOCIEE A DES MOYENS DE TRANSMISSION RF**
KONTAKTLOSE CHIPKARTE MIT RF-KOMMUNIKATIONSMITTELN
CONTACTLESS CHIP CARD ASSOCIATED WITH RF TRANSMISSION MEANS

(30) Priorité: 09.05.1997 CH 108697
(43) Date de publication de la demande: 23.02.2000
(73) Titulaire: NJC Innovations SARL, 1110 Morges (CH)
(72) Inventeur: BERNEY, Jean, Claude, CH-1343 Les Charbonnières (CH)
(74) Mandataire: Gresset, Jean
(86) Numéro de dépôt international: CH9800190
(87) Numéro de publication internationale: WO9852141

(56) Documents cités:
- EP-A- 0 469 762
- PATENT ABSTRACTS OF JAPAN vol. 097, no. 001, 31 janvier 1997 & JP 08 241385 A (HITACHI MAXELL LTD), 17 septembre 1996
- PATENT ABSTRACTS OF JAPAN vol. 016, no. 220 (P-1358), 22 mai 1992 & JP 04 043478 A (NAKANO SHISUTEMU:YUUGEN), 13 février 1992
- PATENT ABSTRACTS OF JAPAN vol. 096, no. 003, 29 mars 1996 & JP 07 306264 A (CHIKUSANYO DENSHI GIJUTSU KENKYU KUMIAI), 21 novembre 1995

## Description

Les cartes à puce les plus répandues dans le commerce comportent le plus souvent un système d'accès par contacts. ce qui pose certains problèmes de fiabilité et exclut toute possibilité de communication à distance Pour résoudre ce problème, certains fabricants proposent d'incorporer à la cane un système de transmission RF passif, permettant à la fois d'alimenter le circuit intégré de la carte et d'assurer la communication avec celui-ci. Ce type de carte comporte une ou plusieurs bobines réceptrices reliées au circuit intégré et placées dans l'épaisseur de la carte. Ces bobines peuvent être de type classique en fil bobiné, mais peuvent être également gravées à la surface du circuit imprimé servant de support d'interconnexion, voire gravées directement à la surface du circuit intégré Ces solutions sont intéressantes, mais se heurtent actuellement à des contraintes d'utilisation qui limitent leur domaine d'application En effet, pour être polyvalentes, ce type de cartes devrait pouvoir répondre aussi bien aux besoins des cartes bancaires usuelles qu'aux besoins des cartes d'accès "mains libres" Cette polyvalence est souhaitable non seulement au niveau de la carte elle-même, mais également au niveau des moyens de transmission RF associés qui permettent la lecture, voire l'écriture de la carte. Dans le cas des cartes bancaires, la transmission RF se fait à courte distance, mais les moyens de lecture-écriture doivent être simples et peu volumineux de manière à pouvoir être incorporés dans des appareils portables et légers comme on en utilise de plus en plus dans les commerces et les restaurants Dans le cas des cartes "mains libres", on peut utiliser des moyens de transmission RF plus volumineux et plus sophistiqués, mais on recherche des distances de lecture importantes pouvant aller jusqu'au mètre

Dans les deux cas, il est important d'avoir le meilleur couplage magnétique possible entre la carte, et particulièrement la ou les bobines réceptrices, et les moyens de transmission RF permettant de lire, voire d'écrire dans cette carte. JP-A-06099000 décrit une carte à puce sans contact ayant de la peinture magnétique déposée sur une de ces faces à une position correspondant à l'ouverture de la bobine de la carte, ce qui a pour effet d'augmenter le flux magnétique passant dans la bobine. La présente invention propose précisément une combinaison particulière carte/moyens de transmission RF permettant d'améliorer de manière significative ce couplage magnétique, dans tous les cas d'applications mentionnés plus haut. Elle concerne un système tel que défini à la revendication 1. La carte à puce peut aussi avoir des multiples applications, elle peut par exemple être une étiquette à mémoire électronique

La figure 1 représente schématiquement à titre d'exemple pour la compréhension de l'invention une combinaison connue carte/moyens de transmission RF pour liaison à courte distance.

La figure 2 représente schématiquement à titre d'exemple une première combinaison carte/moyens de transmission RF pour liaison à courte distance selon l'invention.

La figure 3 représente schématiquement à titre d'exemple une première combinaison carte/moyens de transmission RF pour liaison à longue distance selon la figure 2.

La figure 4 représente schématiquement à titre d'exemple une autre combinaison carte/moyens de transmission RF pour liaison à courte distance selon l'invention.

La figure 5 représente schématiquement à titre d'exemple une autre combinaison carte/moyens de transmission RF pour liaison à longue distance selon l'invention.

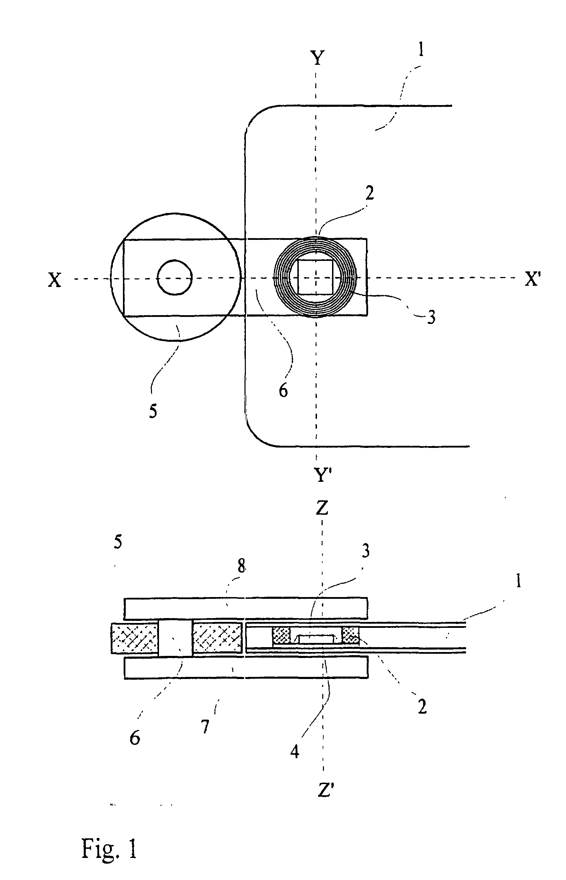

La figure 1 représente schématiquement à titre d'exemple pour la compréhension de l'invention une combinaison connue carte/moyens de transmission RF pour liaison à courte distance Dans cette configuration, la carte 1 comporte une bobine réceptrice 2 et un circuit intégré mémoire 3 montés sur un circuit imprimé d'interconnexion 4 Le tout est incorporé dans l'épaisseur de la carte 1 Cette épaisseur étant faible, le volume cuivre est évidemment limité, et pas là le nombre de spires de la bobine réceptrice 2 Dans le cas représenté, cette bobine réceptrice est de type classique en fil bobiné. Pour des raisons de coût, certains fabricants réalisent ladite bobine par gravage directement sur le circuit imprimé 4, voire directement sur le circuit intégré 3. Il va sans dire que le nombre de spires est alors réduit de manière importante, voire très importante Pour avoir un bon couplage magnétique et assurer une transmission RF correcte, il faut faire traverser ladite bobine par un maximum de flux. Ce flux doit être dans l'axe ZZ' de la bobine réceptrice, soit perpendiculaire à la surface de la carte du plan des axes XX' et YY'. Dans la configuration représentée, la carte à puce est simplement introduite dans une fente ad hoc, comme cela se fait dans les appareils portables. Dans cette configuration, le flux peut être généré par une bobine primaire 5 et dirigé sur la bobine réceptrice 2 par le circuit magnétique 6 comportant deux flasques 7 et 8. Pour que le couplage soit correct, il est nécessaire que la bobine réceptrice 2 soit prise en sandwich entre les deux flasques 7 et 8. Cette configuration n'est toutefois pas optimale La bobine primaire 5 est courte et son nombre de spires est limité. Les deux flasques 7 et 8 du circuit magnétique sont proches l'une de l'autre et une bonne partie du flux généré par la bobine primaire 5 passe d'une flasque à l'autre en dehors de la bobine réceptrice 2. Enfin la longueur les flasques 7 et 8 doit être faible, si bien que l'ensemble bobine/circuit intégré doit être placé près du bord. La carte n'a donc qu'un axe de symétrie XX' et comporte donc un sens obligé d'introduction

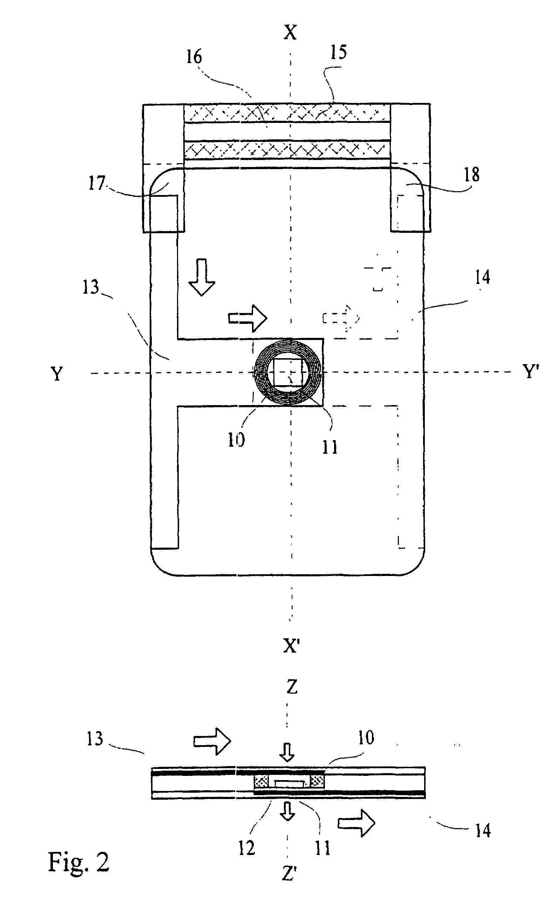

La figure 2 représente schématiquement à titre d'exemple une première combinaison carte/moyens de transmission RF pour liaison à courte distance selon l'invention Dans cette figure on trouve une bobine receptrice 10 ayant un axe ZZ' et un circuit intégré mémoire 11 montés sur un circuit imprimé d'interconnexion 12, et placés au centre de la carte Le plan de la carte s'étend dans les axes XX' et YY' La carte est par exemple une carte à puce rectangulaire avec un axe XX' plus long que l'axe YY'. D'autres géométries de cartes sont bien-sûr possibles Cette carte comporte des zones de perméabilité élevée en forme de T, une zone sur la surface supérieure 13, et une zone sur la surface inférieure 14 Ces zones à perméabilité élevée 13 et 14 en forme de T sont superposées en face de la bobine captrice 10 de telle manière que le flux collecté sur la face supérieure par la zone à perméabilité élevée 13 traverse la carte en face de la bobine réceptrice 10 pour passer dans la zone à perméabilité élevée 14 comme l'indiquent les flèches. Ces zones à perméabilité élevée peuvent être formées par exemple de tôles minces découpées à la forme voulue. Elles peuvent également être formées de particules de ferrite mélangées à un liant, et déposées à la surface de la carte par sérigraphie ou tout procédé similaire On obtient ainsi des couches minces très intéressantes dans ce type d'application L'épaisseur de la zone à perméabilité élevée peut être réglée si nécessaire en superposant plusieurs couches. Rappelons toutefois que les flux mis en jeu sont faibles et qu'il n'y a pas de risque de saturation même pour des couches très minces. Les moyens de transmission RF comportent la bobine primaire 15 montée sur un circuit magnétique 16 comportant deux flasques 17 et 18 Ces deux flasques comportent des fentes dans lesquelles on peut introduire l'extrémité de la carte à puce On voit que pour créer des lignes de flux parallèles à la surface de la carte à puce selon l'invention, L'axe de la bobine primaire 15 est placé dans le plan de la carte, par exemple dans le sens YY', et non perpendiculairement au plan de la carte comme à la figure précédente. Sans augmentation de volume, cela permet d'avoir une bobine primaire 15 longue, donc un nombre de spires élevé. Par ailleurs les deux flasques 17 et 18 sont très écartées Le flux a donc tendance à passer prioritairement par les zones à perméabilité élevée 13 et 14

Ces zones permettent donc d'amener la presque totalité du flux généré par la bobine primaire 15 sur la bobine captrice 10 Il y a donc amélioration significative du couplage entre bobine primaire et bobine captrice, but de la présente invention Notons également que la carte a deux axes de symétrie XX' et YY' Il n'y a donc plus de sens obligé d'introduction, ce qui est un avantage pratique indiscutable

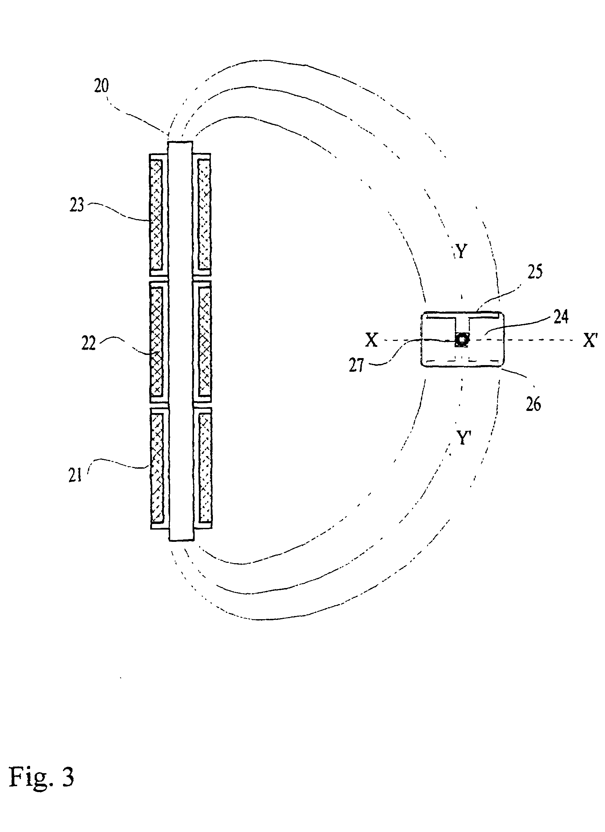

La figure 3 représente schématiquement à titre d'exemple une première combinaison carte/moyens de transmission RF pour liaison à longue distance selon la figure 2. Si la configuration proposée par l'invention présente de nombreux avantages pour la transmission à courte distance, elle est encore plus avantageuse pour la transmission à longue distance. Là encore, la disposition des moyens de transmission RF nécessaires à la mise en oeuvre de l'invention diffèrent fondamentalement des moyens classiques utilisés actuellement. En effet, dans les systèmes d'accès "mains libres" usuels, on admet que la carte à puce doit être positionnée verticalement, par exemple dans une poche. Il est donc nécessaire, pour avoir un flux perpendiculaire à la surface de la carte qui traverse la bobine captrice de part en part, de générer des lignes de flux horizontales. Or dans notre cas on doit générer des lignes de flux parallèles à la surface de la carte à puce, c'est à dire des lignes de flux verticales par exemple dans le sens de l'axe YY' A cette fin, les moyens de communication RF comportent un noyau magnétique 20 sur lequel sont montées une ou plusieurs bobines primaires 21,22,23 capables de générer des lignes de flux verticales. En fait la longueur du noyau 20 peut être adaptée à la distance de travail que l'on désire obtenir. Elle peut aller de quelques centimètres à 1 voire 2 mètres Comme il n'est guère pratique de réaliser des bobines de cette longueur, il est préférable de pouvoir empiler plusieurs bobines que l'on pourra brancher en série ou en parallèle selon les besoins.

Voyons ce qui se passe lorsque on place une carte à puce selon l'invention 24 dans le chemin du flux généré par les bobines primaires 21, 22, 23 En amont, la zone à haute perméabilité 25 va capter les lignes de flux qui passent à proximité, et ceci sur toute sa longueur, et les diriger en aval sur la zone à haute perméabilité 26. Pour cela le flux collecté doit passer d'une face de la carte à l'autre à l'endroit où se trouve la bobine 27. Les zones à perméabilité 25 et 26 fonctionnent donc à la manière d'un entonnoir qui oblige le flux qui passe à proximité de la carte à se concentrer sur la bobine. Le fait d'augmenter la part du flux généré par les bobines primaires qui passe dans la bobine captrice 27 permet une amélioration significative du couplage magnétique, but de la présente invention.

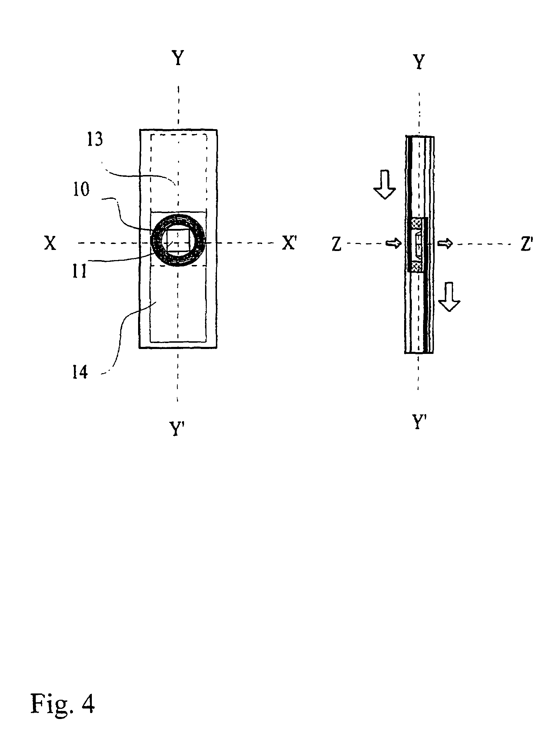

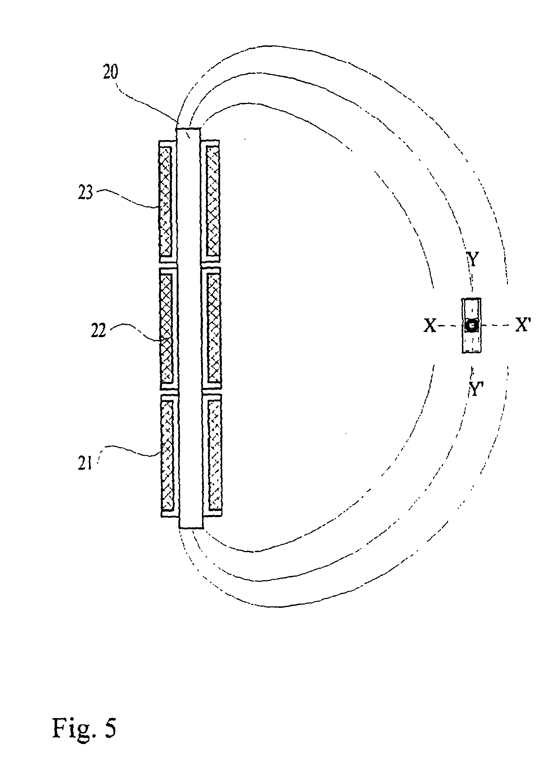

Les figures 4 et 5 représentent schématiquement à titre d'exemple une autre combinaison carte/moyens de transmission RF pour liaison à courte et longue distance selon l'invention. Cette combinaison ressemble beaucoup à celle des figures 2 et 3 La différence majeure consiste dans les dimensions et l'utilisation de la carte La carte à puce selon les figures 4 et 5 peut être utilisée comme simple étiquette électronique. La présente discussion se limite donc surtout aux différences par rapport à la première combinaison selon les figures 2 et 3. On retrouve une bobine réceptrice 10 orientée selon l'axe ZZ' et un circuit intégré mémoire 11 montés sur un circuit imprimé d'interconnexion, et placés au centre de la carte. A la différence d'une carte à puce traditionnelle, une étiquette peut être plus petite et elle peut avoir des géométries très variées La réalisation selon les figures 4 et 5 montre à titre d'exemple une étiquette en forme de ruban s'étendant dans un plan avec un axe XX' sensiblement plus petit que l'axe YY' Cette carte comporte des zones de perméabilité élevée, non en forme de T, mais en forme rectangulaire, une zone sur la surface inférieure 14, et une zone sur la surface supérieure 14 Ces zones à perméabilité élevée 13 et 14 rectangulaires sont superposées en face de la bobine captrice 10 de telle manière que le flux collecté sur la face inférieure par la zone à perméabilité élevée 14 traverse la carte en face de la bobine 10 pour passer dans la zone de perméabilité élevée 13 comme l'indiquent les flèches. Ces zones à perméabilité élevée peuvent être formées par exemple de tôles minces découpées a la forme voulue Elles peuvent également être formées de particules de ferrite mélangées à un liant, et déposées à la surface de la carte par sérigraphie ou tout procédé similaire. On obtient ainsi des couches minces très intéressantes dans ce type d'application. L'épaisseur de la zone à perméabilité élevée peut être réglée si nécessaire en superposant plusieurs couches. Une transmission à longue distance comme décrit plus haut dans le cas de l'application de l'invention par une carte à puce selon la figure 3 est bien-sûr aussi et pareillement possible pour l'application par une étiquette montrée par la figure 5. L'homme de l'art, en connaissant la présente invention peut réaliser d'autres géométries .des zones à perméabilité élevée pour d'autres applications sans dépasser le cadre de l'invention tel que défini par les revendications.

Toutes les solutions décrites sont extensibles à des cartes à puce comportant plusieurs bobines captrices, par exemple deux bobines captrices concentriques

Il y a évidemment beaucoup d'autres possibilités d'application de l'invention, mais leur description n'apporterait pas d'éléments supplémentaires à sa compréhension

## Revendications

1. Système comprenant une carte à puce et des moyens (15 à 18 ; 20 à 23) de transmission RF pour communiquer avec ladite carte à puce et au besoin l'alimenter, cette carte à puce comprenant au moins une bobine captrice (10 ; 27) reliée à un circuit intégré mémoire (11), caractérisée par le fait que lesdits moyens de transmission RF sont agencés de manière à générer des lignes de flux parallèles à la surface de ladite carte à puce, cette dernière comprenant sur ses deux faces des zones (13, 14 ; 25, 26) à perméabilité magnétique élevée agencées de manière à capter ces lignes de flux sur une première face, et à les transférer sur la deuxième face à l'endroit où se trouve la bobine captrice.

2. Système comprenant une carte à puce et des moyens de transmission RF selon la revendication 1, caractérisé par le fait que lesdites zones à perméabilité élevée sont agencées de manière que la carte à puce ait 2 axes de symétrie en regard des moyens de transmission RF.

3. Système comprenant une carte à puce et des moyens de transmission RF selon la revendication 1, caractérisé par le fait que lesdites zones à perméabilité élevée sont en forme de T ou rectangulaire, et sont agencées de manière que la zone de la première face recouvre la zone de la deuxième face en regard de la bobine captrice.

4. Système comprenant une carte à puce et des moyens de transmission RF selon la revendication 1, caractérisé par le fait que lesdites zones sont réalisées par dépose en surface de particules de matière à haute perméabilité mélangées à un liant.

5. Système comprenant une carte à puce et des moyens de transmission RF selon la revendication 1, caractérisé par le fait que les moyens de transmission RF comportent au moins une bobine primaire montée sur un noyau de forme allongée disposé parallèlement à la surface de la carte à puce.

6. Système comprenant une carte à puce et des moyens de transmission RF selon les revendications 1 et 5, caractérisé par le fait que les moyens (15 à 18) de transmission RF; comportent au moins une bobine primaire (15) montée sur un circuit magnétique (16) disposé en bout de la carte à puce, et sont agencés de manière à générer des lignes de flux parallèles à la surface de ladite carte à puce dans le sens de la largeur.

7. Système comprenant une carte à puce et des moyens de transmission RF selon les revendications 1 ou 5, caractérisé par le fait que les moyens (20 à 23) de transmission RF sont fixes et comportent au moins une bobine primaire (21 à 23) montée sur un circuit magnétique (20), et sont disposés de manière à générer des lignes de flux verticales.

8. Utilisation d'une carte à puce dans un système selon une des revendications 1 à 7, caractérisé par le fait qu'elle est utilisé comme carte d'accès "mains libres" ou étiquette électronique et/ou magnétique.

## Patentansprüche

1. System mit einer Chipkarte und RF-Übertragungsmitteln zur Kommunikation mit der Chipkarte und ihrer Speisung je nach Bedarf. Zur Chipkarte gehört mindestens eine Sensorspule, die mit einem integriertem Speicherschaltkreis verbunden ist. Die RF-Übertragungsmittel sind so angeordnet, dass auf der Oberfläche der Chipkarte die Flusslinien parallel verlaufen. Die Karte enthält auf zwei Seiten Zonen mit erhöhter magnetischer Permeabilität, so dass die Flusslinien auf einer ersten Seite erfasst und dann an die zweite Seite mit der Sensorspule übertragen werden.

2. System mit einer Chipkarte und RF-Übertragungsmitteln entsprechend den Anforderungen aus 1, die Zonen mit erhöhter magnetischer Permeabilität sind so angeordnet, dass die Clhipkarte 2 Symmetrieachsen zu den RF-Übertragungsmitteln hat.

3. System mit einer Chipkarte und RF-Übertragungsmitteln entsprechend der Anforderung aus 1, bei dem die Zonen erhöhter magnetischer Permeabilität T-förmig oder rechtwinklig sind. Gleichzeitig sind sie so angeordnet, dass die Zone der ersten Seite die Zone der zweiten Seite gegenüber der Sensorspule bedeckt.

4. System mit einer Chipkarte und RF-Übertragungsmitteln entsprechend den Anforderungen aus 1, bei dem die Zonen erhöhter magnetischer Permeabilität mit sehr durchlässigem Materialteilchen beschichtet sind, die mit einem Binder vermischt sind.

5. System mit einer Chipkarte und RF-Übertragungsmitteln entsprechend den Anforderungen aus 1, bei dem die RF-Übertragungsmittel mindestens 1 Primärspule auf einem liegenden Spulenkem enthalten, der parallel zur Chipkartenoberfläche angebracht ist.

6. System mit einer Chipkarte und RF-Übertragungsmitteln entsprechend den Anforderungen aus 1 und 5, bei dem die RF-Übertragungsmittel mindestens eine Primärspule enthalten, die auf einem magnetischen Kreis angebracht ist, der sich am Kopfenende der Chipkarte befindet und die so angeordnet sind, dass die Flusslinien parallel zur Chipkartenoberfläche in Längsrichtung verlaufen.

7. System mit einer Chipkarte und RF-Übertragungsmitteln entsprechend den Anforderungen aus 1 und 5, bei dem die RF-Übertragungsmittel fixiert sind und mindestens eine Primärspule auf einem magnetischen Kreis enthalten, und so angebracht sind, dass sie vertikale Flusslinien erzeugen.

8. Einsatz einer Chipkarte in einem System entsprechend den Anforderungen aus 1 und 7, die als Zugangskarte für Freisprechanlagen oder elektronische und/oder magnetische Etiketten verwendet wird.

## Claims

1. System including a smartcard and RF transmission means (15 to 18; 20 to 23), for communication with said smartcard and supplying it with power as required, this smartcard including at least one pick up coil (10; 27) connected to an integrated memory circuit (11), **characterised in that** said RF transmission means are arranged so as to generated lines of flux parallel to the surface of said smartcard, the latter including on its two faces zones (13, 14; 25, 26) of high magnetic permeability arranged so as to pick up these lines of flux across a first face, and to transfer them to a second face at the location in which the pick up coil(s) are situated.

2. System including a smartcard and RF transmission means according to claim 1, **characterised in that** said high permeability zones are arranged so that the smartcard has two axes of symmetry facing the RF transmission means.

3. System including a smartcard and RF transmission means according to claim 1, **characterised in that** said high permeability zones are T shaped or rectangular, and are arranged so that the zone of the first face covers the zone of the second face facing the pick up coil.

4. System including a smartcard and RF transmission means according to claim 1, **characterised in that** said zones are made by surface deposition of particles of high permeability material mixed with a binding agent.

5. System including a smartcard and RF transmission means according to claim 1, **characterised in that** the RF transmission means include at least one primary coil mounted on a core of elongated shape arranged parallel to the surface of the smartcard.

6. System including a smartcard and RF transmission means according to claims 1 and 5, **characterised in that** the RF transmission means (15 to 18) include at least one primary coil (15) mounted on a magnetic circuit (16) arranged at the end of the smartcard, and are arranged so as to generate lines of flux parallel to the surface of said smartcard in the direction of the width.

7. System including a smartcard and RF transmission means according to claims 1 or 5, **characterised in that** the RF transmission means (20 to 23) are fixed and include at least one primary coil (21 to 23) mounted on a magnetic circuit (20), and are arranged so as to generate vertical lines of flux.

8. Use of a smartcard in a system according to claims 1 to 7, **characterised in that** it is used as a "hands free " access card or electronic and/or magnetic tag.
